# EUROPEAN PATENT APPLICATION

(11) **EP 4 597 599 A1**
(43) Date of publication of application: **06.08.2025**
(21) Application number: 22960951.6
(22) Date of filing: 29.09.2022
(51) Int. Cl.: H01M 4/06, H01M 4/62

(54) **POSITIVE ELECTRODE FOR LITHIUM BATTERY AND LITHIUM BATTERY**

(71) Applicant: FDK Corporation, Tokyo 108-8212 (JP)
(72) Inventor: OCHIAI, Yuki, Tokyo 108-8212 (JP); SUZUKI, Maki, Tokyo 108-8212 (JP); MATSUI, Shunji, Tokyo 108-8212 (JP)
(74) Representative: Biallo, Dario
(86) International application number: PCT/JP2022/036565
(87) International publication number: WO 2024/069891

(57) **Abstract**

This positive electrode for a lithium battery includes a positive electrode active material containing manganese dioxide and a conductive auxiliary agent. The conductive auxiliary agent includes carbon black. The carbon black has an average primary particle size of 30 nm or more and a specific surface area of 1000 m²/g or more, and contains Al.

## Description

The present invention relates to a lithium battery positive electrode and a lithium battery.

### Background Art

Lithium batteries, which have a high energy density and excellent storage properties, are widely used as power sources and backup power sources for various small portable devices.

In order to enhance the conductivity of the electrodes of various batteries including such lithium batteries, a conductive auxiliary agent such as carbon black is added. Among them, Ketjen black is often used as a conductive auxiliary agent because it exhibits high conductivity and liquid retention property even in small amounts.

For example, Patent Literature 1 discloses a lithium primary battery including: a positive electrode containing manganese dioxide as a positive electrode active material, Ketjen black as a conductive auxiliary agent, and a fluorocarbon resin as a binder; a negative electrode containing lithium metal as a negative electrode active material; and a non-aqueous electrolyte (PC/DME).

### Citation List

### Patent Literature

PTL 1
Japanese Patent Application Laid-Open No. 2011-060655

### Summary of Invention

### Technical Problem

As described above, manganese dioxide is used as a positive electrode active material, particularly in lithium batteries. Manganese dioxide is more likely to increase the density of the polar plate by rolling compared to other positive electrode active materials (for example, Li-containing composite oxides or the like). However, there is a problem in that when Ketjen black is used as a conductive auxiliary agent in an electrode containing such manganese dioxide, the electrode excessively swells due to the excessively high liquid retention property with respect to the electrolyte. When the electrode swells excessively, the adhesion between the electrode mixture layer and the current collector decreases, making it easier for the electrode mixture to peel off from the current collector. For this reason, there is a problem in that the quality and reliability are reduced.

**In** contrast, when carbon black with a small specific surface area is used, the liquid retention property of the electrolyte is appropriately suppressed, and thus, it is considered that the swelling of the electrode can be reduced. However, when carbon black with a small specific surface area is used, there is a problem in that the discharge capacity of the battery is likely to be insufficient.

The present invention has been made based on the above circumstances, and an object thereof is to provide a lithium battery positive electrode and a lithium battery each capable of suppressing the swelling of the electrode while maintaining the discharge capacity.

### Solution to Problem

The present invention relates to the following battery positive electrode and the following battery.
[1] A lithium battery positive electrode, including:
   a positive electrode active material containing manganese dioxide; and
   a conductive auxiliary agent, in which
   the conductive auxiliary agent includes carbon black, where the carbon black has an average primary particle diameter of 30 nm or more and a specific surface area of 1000 m²/g or more and contains Al.
[2] The lithium battery positive electrode according to [1], in which a content of Al in the carbon black is 5 mass ppm or more with respect to the carbon black.
[3] The lithium battery positive electrode according to [1] or [2], in which the content of Al in the carbon black is less than 20 mass ppm with respect to the carbon black.
[4] The lithium battery positive electrode according to any one of [1] to [3], in which the positive electrode active material further contains a graphite-based active material.
[5] The lithium battery positive electrode according to any one of [1] to [4], in which the conductive auxiliary agent further contains graphite.
[6] A lithium battery, including:
   the lithium battery positive electrode according to any one of [1] to [5];
   a negative electrode containing metal lithium or a lithium alloy;
   a separator disposed between the lithium battery positive electrode and the negative electrode; and
   an electrolyte.
[7] The lithium battery according to [6], in which the electrolyte contains a cyclic carbonate solvent and a chain carbonate solvent.

### Advantageous Effects of Invention

According to the present invention, it is possible to provide a lithium battery positive electrode and a lithium battery each capable of suppressing the swelling of the electrode while maintaining the discharge characteristics.

### Brief Description of Drawings

FIG. 1A is a schematic perspective view illustrating a configuration of a lithium primary battery according to an embodiment of the present invention;
FIG. 1B is an exploded perspective view of the lithium primary battery in FIG. 1A; and
FIG. 2 is a graph illustrating discharge curves of batteries in Examples and Comparative Examples.

### Description of Embodiments

As described above, the swelling of the electrode due to the retention of the electrolyte is likely to occur when carbon black with a large specific surface area of 1000 m²/g or more is used.

In contrast, the present inventors have found that even if the specific surface area is large, the swelling of the electrode can be suppressed with carbon black containing Al (aluminum). That is, carbon black usually contains metal impurities derived from raw materials or manufacturing methods, but the present inventors have found that, inter alia, carbon black containing Al can suppress the swelling of the electrode.

Although the reason is not clear, the mechanism can be deduced as follows. Aluminum includes an oxide film (for example, Al₂O₃) on the surface. Since the oxide film exhibits hydrophilicity, the affinity with the non-aqueous electrolyte, which is hydrophobic, is relatively low. For this reason, it is considered that carbon black containing Al is less likely to excessively retain the electrolyte.

That is, the positive electrode of the present invention includes manganese dioxide as a positive electrode active material and carbon black containing Al as a conductive auxiliary agent. Hereinafter, a positive electrode and a lithium battery using the positive electrode in the present invention will be specifically described.

### 1. Lithium Battery

Hereinafter, a lithium primary battery will be described as an example of a lithium battery according to the present embodiment.

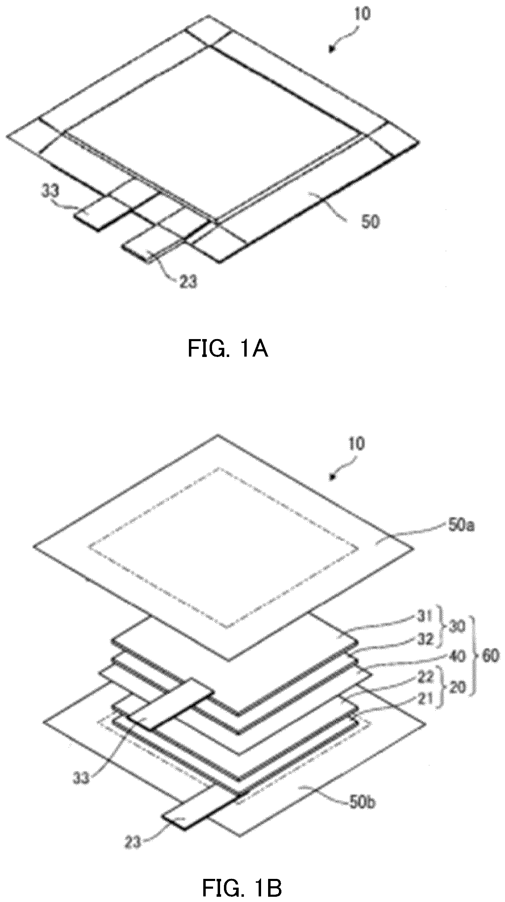

FIG. 1A is a schematic perspective view illustrating a configuration of a lithium primary battery according to an embodiment of the present invention, and FIG. 1B is an exploded perspective view of the lithium primary battery in FIG. 1A.

As illustrated in FIGS. 1A and 1B, lithium primary battery 10 is a so-called thin lithium primary battery, and includes positive electrode 20, negative electrode 30, separator 40, an electrolyte (not illustrated), and exterior body 50. That is, lithium primary battery 10 is a battery in which electrode body 60, in which positive electrode 20 and negative electrode 30 are disposed to face each other with separator 40 interposed therebetween, is sealed in exterior body 50 together with a non-aqueous electrolyte.

### 1-1. Positive Electrode

Positive electrode 20 includes a positive electrode active material and a conductive auxiliary agent. In the present embodiment, positive electrode 20 includes positive electrode current collector 21 and positive electrode mixture 22; and positive electrode mixture 22 contains a positive electrode active material and a conductive auxiliary agent.

The material constituting positive electrode current collector 21 may be, for example, stainless steel or aluminum. The shape of positive electrode current collector 21 may be, for example, a foil shape, a film shape, a net shape, a punched or expanded shape, a porous body, a foam, or the like. Among them, a stainless steel foil is preferred. Positive electrode terminal plate 23, which is constituted by stainless steel or the like, is connected to positive electrode current collector 21, and positive electrode terminal plate 23 is led out to the outside of exterior body 50.

Positive electrode mixture 22 is supported on positive electrode current collector 21. The positive electrode active material contained in positive electrode mixture 22 contains manganese dioxide, and may further contain other active materials as necessary. Examples of the other active materials include graphite-based active materials such as graphite fluoride, metal oxides such as MoO₃, V₂O₅, and Mn₂O₄, and metal sulfides such as TiS₂ and MoS. Among them, a graphite-based active material such as graphite fluoride is preferable. The graphite-based active material can not only reduce the decrease in the pulse characteristics at the end of discharge, but also enhance the rollability.

The content of the graphite-based active material in positive electrode mixture 22 is not particularly limited, but may be 0.1 to 2.0% by mass with respect to manganese dioxide. When the content ratio of the graphite-based active material is increased, not only can the decrease in the pulse characteristics at the end of discharge be reduced, but also the rollability can be enhanced.

The conductive auxiliary agent includes carbon black having a specific surface area of 1000 m²/g or more and containing Al.

When the specific surface area of the carbon black is 1000 m²/g or more, the carbon black can form a structure well, and thus, the conductivity of positive electrode mixture 22 is likely to be sufficiently enhanced, and the discharge capacity can be maintained well. The specific surface area of the carbon black is more preferably 1000 to 2000 m²/g. The specific surface area of the carbon black can be measured by the BET method using nitrogen adsorption in accordance with ASTM-D6556.

The content of Al in the carbon black is not particularly limited, but is preferably 5 mass ppm or more with respect to the carbon black. When the Al content is 5 mass ppm or more, the liquid retention amount is unlikely to become excessively large, and the swelling of the electrode can be further suppressed. The upper limit of the Al content in the carbon black is not particularly limited, but is preferably 500 mass ppm or less, and more preferably 20 mass ppm or less, from the viewpoint of making it difficult to further impair the conductivity and the liquid retention property.

The content of Al can be determined by pre-treating carbon black with an acid decomposition method in accordance with JIS K 0116:2014 to form a solution, and then measuring the content of Al ions/atoms in the solution by using ICP optical emission spectrometer SPS3500 manufactured by SSI NanoTechnology Inc.

Note that, even in a case where positive electrode mixture 22 further contains graphite to be described later, it is possible to identify a material, in which a regular crystal structure is observed by TEM observation or the like, as graphite, and a material, in which a regular crystal structure is not observed by TEM observation or the like, as carbon black. Then, carbon black containing Al is separated and recovered from positive electrode mixture 22, and the above-described ICP measurement is performed on the carbon black, thereby confirming the content of Al in the carbon black.

Further, the total amount of metal impurities containing Al is not particularly limited, but may be, for example, 3000 mass ppm or less. The total amount of metal impurities can be measured in the same manner as described above.

The DBP oil absorption amount of the carbon black is not particularly limited, but is preferably 250 to 800 mL/100 g. When the DBP oil absorption amount is within the above range, it is easy to appropriately ensure the liquid retention property of the electrolyte. The DBP oil absorption amount can be measured in accordance with ASTM D-2414 (JIS K 6217-4). The DBP oil absorption amount can be adjusted by, for example, the average primary particle diameter, the pore volume, the pore diameter, the content of Al, and the like.

The average primary particle diameter of the carbon black is not particularly limited, but is, for example, 30 nm or more, and may be 30 to 100 nm. When the average primary particle diameter of the carbon black is 30 nm or more, the swelling amount of the electrode when liquid is retained is likely to be large. Even in such a case, the swelling of the electrode can be reduced to a certain level or less by using carbon black containing Al. The average primary particle diameter of carbon black can be determined by measuring the particle diameters of any 100 particles with an electron microscope and calculating the average value of the measured particle diameters.

The type of the carbon black may be any type as long as it has a specific surface area satisfying at least the above range and contains Al, and may be, for example, furnace black.

The content of the carbon black is not particularly limited, but is preferably 1 to 10% by mass with respect to the positive electrode active material. When the content of the carbon black is 1% by mass or more, the conductivity of positive electrode mixture 22 is more likely to be enhanced, and when the content of the carbon black is 10% by mass or less, the content ratio of the positive electrode active material can be increased, and thus, the discharge capacity can be further increased.

With respect to the conductive auxiliary agent, a conductive auxiliary agent other than that described above may be further contained as long as the effect of the present invention is not impaired. Examples of such a conductive auxiliary agent include graphite. Graphite not only further enhances the conductivity of positive electrode mixture 22, but also can further enhance the rollability. That is, positive electrode mixture 22 further containing graphite is more likely to increase the plate density, but the swelling of the electrode is more likely to occur. Even in such a case, the use of the above carbon black can prevent the electrode from swelling. Note that, the above carbon black and graphite can be identified by TEM observation.

Note that, graphite is different from the graphite-based active material, which is a positive electrode active material. For example, the average primary particle diameter of graphite may be smaller than that of the graphite-based active material, and may be usually 1 to 20 µm. The content of graphite may be 1 to 10% by mass with respect to the positive electrode active material.

Positive electrode mixture 22 may further contain a binder as necessary. Examples of the binder include fluorocarbon resins such as polytetrafluoroethylene (PTFE) and polyvinylidene fluoride (PVdF), and styrene-butadiene rubber (SBR).

The thickness of positive electrode 20 in a case where positive electrode mixture 22 is applied to both surfaces of positive electrode current collector 21 may be, for example, 100 to 800 µm, depending on the desired capacity. When the thickness of positive electrode 20 is 100 µm or more, the discharge capacity is likely to be further increased, and when the thickness of positive electrode 20 is 800 µm or less, the diffusion distance of Li ions in positive electrode mixture 22 can be further shortened, and thus, it is easier to further suppress the internal resistance value of the battery.

### 1-2. Negative Electrode

Negative electrode 30 includes metal lithium or a lithium alloy as a negative electrode active material. In the present embodiment, negative electrode 30 includes negative electrode current collector 31, and metal lithium or a lithium alloy as negative electrode active material 32.

The material constituting negative electrode current collector 31 may be, for example, copper, nickel, stainless steel, or the like. The shape of negative electrode current collector 31 may be the same as described above. Among them, a copper foil is preferable. Negative electrode terminal plate 33, which is made of stainless steel or the like, is connected to negative electrode current collector 31, and negative electrode terminal plate 33 is led out to the outside of exterior body 50. Note that, negative electrode current collector 31 may be omitted. In that case, negative electrode terminal plate 33 is directly connected to negative electrode active material 32.

Negative electrode active material 32 may be plate-like metal lithium or a plate-like lithium alloy. Examples of the lithium alloy include Li-Al (aluminum-lithium alloy), Li-Sn, Li-Pb, Li-Ni-Si, and the like, and the lithium alloy is preferably Li-Al.

### 1-3. Separator

Separator 40 is disposed between positive electrode 20 and negative electrode 30, and electrically insulates positive electrode 20 and negative electrode 30. Separator 40 may be a microporous resin film or a nonwoven fabric of an olefin-based resin such as polyethylene or polypropylene.

### 1-4. Electrolyte

The electrolyte is filled in the internal space of exterior body 50. Thus, positive electrode 20, negative electrode 30, and separator 40 are immersed in the electrolyte solution. In the present embodiment, the electrolyte is a non-aqueous electrolyte (organic electrolyte). The non-aqueous electrolyte contains a non-aqueous solvent and an electrolyte.

The type of non-aqueous solvent is not particularly limited, and cyclic carbonates such as propylene carbonate (PC) and ethylene carbonate (EC), chain carbonates such as dimethyl carbonate (DMC) and diethyl carbonate (DEC), ethers such as 1,2-dimethoxyethane (DME), and lactones such as γ-butyrolactone can be used. These may be used alone or in combination of two or more. For example, a cyclic carbonate and a chain carbonate may be used in combination from the viewpoint of further achieving both the dielectric constant and the viscosity.

The electrolyte is a lithium salt, and examples thereof include lithium hexafluorophosphate (LiPF₆), lithium perchlorate (LiClO₄), lithium trifluoromethanesulfonate (LiCF₃SO₃), LiN(CF₃SO₂)₂, LiN(C₂F₅SO₂)₂, and LiN(CF₃SO₂)(C₄F₉SO₂).

The concentration of the electrolyte in the electrolyte solution is not particularly limited, but may be, for example, 0.1 to 5 mol%, preferably 0.25 to 3.5 mol%. The concentration of the electrolyte means the total concentration of the dissociated and undissociated components.

### 1-5. Exterior body

Exterior body 50 is a case that encloses positive electrode 20, negative electrode 30, separator 40, and an electrolyte (not illustrated). **In** the present embodiment, exterior body 50 is constituted by a flexible aluminum laminate film. That is, exterior body 50 is a bag-shaped body in which the peripheral region of film 50a and the peripheral region of film 50b are welded to each other.

### 2. Method for Manufacturing Lithium Battery

The lithium primary battery can be manufactured by any method. For example, the lithium primary battery can be manufactured by steps: 1) preparing electrodes (positive electrode and negative electrode); and 2) obtaining a lithium primary battery by using the prepared electrodes.

### Regarding Step of 1)

**In** the present embodiment, positive electrode 20 can be obtained, for example, by mixing and kneading the above positive electrode active material, the above conductive auxiliary agent, the above binder, and water or a solvent to obtain a positive electrode mixture slurry, then applying and drying the positive electrode mixture slurry on positive electrode current collector 21, and rolling the positive electrode mixture slurry as necessary. By performing rolling, it is possible to increase the filling density of the active material in positive electrode mixture 22.

**In** the present embodiment, negative electrode 30 may be obtained, for example, by crimping negative electrode active material 32 to negative electrode current collector 31, or, in the same manner as described above, by mixing negative electrode active material 32, the conductive auxiliary agent, the binder, and appropriate amount of water or solvent to obtain a negative electrode mixture slurry, then applying and drying the slurry on the surface of negative electrode current collector 31, and rolling the slurry as necessary.

Further, one end of positive electrode terminal plate 23 is welded to positive electrode current collector 21, and one end of negative electrode terminal plate 33 is welded to negative electrode current collector 31. **In a** case where negative electrode 30 does not include negative electrode current collector 31, one end of negative electrode terminal plate 33 may be directly welded to negative electrode active material 32.

### Regarding Step of 2)

Next, positive electrode 20, negative electrode 30, and separator 40 are laminated such that separator 40 is sandwiched between negative electrode active material 32 of negative electrode 30 and positive electrode mixture 22 of positive electrode 20, thereby forming electrode body 60.

This electrode body 60 is placed inside exterior body 50 having a bag shape. For example, three rectangular sides of two aluminum laminate films 50a and 50b that face each other are welded to each other, and the remaining one sides thereof are opened to form a bag shape. Electrode body 60 is housed in these aluminum laminate films 50a and 50b having a bag shape, and positive electrode terminal plate 23 and negative electrode terminal plate 33 are led out to the outside of exterior body 50 from the opening portions of aluminum laminate films 50a and 50b having a bag shape.

Next, an electrolyte is injected into exterior body 50 in which electrode body 60 is housed, and the electrolyte is impregnated into electrode body 60 under reduced pressure.

Subsequently, the peripheral edge of one side of the opening side of exterior body 50 is welded to seal the opening portion of exterior body 50. Thus, lithium primary battery 10 can be obtained.

### 3. Variation

Note that, in the above embodiment, an example of a thin (laminate) battery has been described, but the present invention is not limited thereto, and the battery may have any of a coin shape, a cylindrical shape, a prismatic shape, or a laminated shape. Further, the current collector can be omitted because it is also used as an exterior body or a terminal depending on the shape of the battery. For example, in a coin-shaped battery, the outer case or the sealing plate also serves as a current collector or a terminal, so it is not necessary to provide a new current collector or terminal.

Further, in the above embodiment, the lithium battery is a primary battery, but the present invention is not limited thereto, and the lithium battery may be a secondary battery.

As described above, the carbon black can be used as a conductive auxiliary agent to be added to electrodes of various batteries.

### Examples

Hereinafter, the present invention will be described with reference to Examples. The scope of the present invention is not interpreted to be limited by Examples.

### 1. Type of Conductive Auxiliary Agent

Conductive auxiliary agent 1: XE2-B (furnace black, manufactured by Orion Engineered Carbons S.A.)
Conductive auxiliary agent 2: XPB538 (furnace black, manufactured by Orion Engineered Carbons S.A.)
Conductive auxiliary agent 3: EC600JD (Ketjen black, manufactured by Lion Specialty Chemicals Co., Ltd.)
Conductive auxiliary agent 4: 420B (acetylene black, manufactured by Orion Engineered Carbons S.A.)
Conductive auxiliary agent 5: Li-400 (manufactured by Denka Company Limited, acetylene black)

The physical properties of each conductive auxiliary agent are illustrated in Table 1, and the metal impurity amounts are illustrated in Table 2.

**[Table 1]**

| Conductive auxiliary agent | Average primary particle diameter [nm] | DBP oil absorption amount [ml/100 g] | pH | Specific surface area [m²/g] |
|---|---|---|---|---|
| 1 | 30 | 420 | 9.2 | 1100 |
| 2 | 31 | 280 | 9.9 | 1064 |
| 3 | 34 | 495 | 9 | 1180 |
| 4 | 24 | 153 | 8 | 78 |
| 5 | 48 | - | 9 | 40 |

**[Table 2]**

| Conductive auxiliary agent | Metal impurity amounts [mass ppm mg/L] | | | | | | |
|---|---|---|---|---|---|---|---|
| | Al | Fe | Cr | Ni | Mo | Cu | Zn |
| 1 | 9.79 | 1082.86 | 4.26 | 1379.95 | 6.76 | 0 | 28.35 |
| 2 | 10.21 | 45.76 | 1.72 | 1.52 | 0 | 0 | 1.19 |
| 3 | 0 | 92.76 | 1.43 | 3.88 | 6.19 | 11.34 | 11.72 |
| 4 | 0 | 8.74 | 0.58 | 1.03 | 0 | 0 | 0 |
| 5 | 0 | 13.91 | 0.16 | 2.23 | 0 | 0 | 5.1 |

Each physical property was measured by the following method.

### (Average Primary Particle Diameter)

The particle diameters of any 100 particles were measured using an electron microscope, and the average value of these particle diameters was determined.

### (DBP Oil Absorption Amount)

The measurement was performed in accordance with ASTM D-2414 (JIS K 6217-4).

### (pH)

The pH was measured in accordance with ASTM D1512 by dispersing a known amount of carbon black in water and measuring the pH of the aqueous phase by using a pH probe.

### (Specific Surface Area)

The specific surface area was measured by the BET method through nitrogen adsorption in accordance with ASTM-D6556.

### (Metal Impurity Amounts)

The carbon black was pretreated by the acid decomposition method in accordance with JIS K 0116:2014 to form a solution. The content of Al ions/atoms in the resulting solution was measured using ICP optical emission spectrometer (SPS3500, manufactured by SSI NanoTechnology Inc.).

### 2. Production and Evaluation of Lithium Battery

### <Example 1>

### (Production of Positive Electrode)

A slurry-like positive electrode mixture was prepared by kneading 88.9% by mass of electrolytic manganese dioxide, which is a positive electrode active material, 1.8% by mass of graphite fluoride, which is a graphite-based active material, 3.8% by mass of conductive auxiliary agent 1 (XE2-B, manufactured by Orion Engineered Carbons S.A.), which is a conductive auxiliary agent, 1.0% by mass of graphite (average primary particle diameter of 15 µm), 4.5% by mass of polytetrafluoroethylene (PTFE), which is a binder, and an appropriate amount of water, all based on the total solid content. The positive electrode mixture was applied to both surfaces of an expanded metal made of stainless steel (SUS), which serves as a current collector, such that the size of the applied portion was 20 × 30 cm. After application, the positive electrode mixture was dried and rolled to produce a positive electrode with an overall thickness of approximately 150 µm. The density of the mixture after rolling was 3.1 g/cm³.

### (Production of Negative Electrode)

Sheet-shaped metal lithium was cut into a size of 25 × 35 cm and used as the negative electrode.

### (Production of Electrolyte)

Propylene carbonate (PC)/ethylene carbonate (EC)/dimethoxyethane (DME) = 10.5/10.5/79.0 (volume ratio) was dissolved with LiCF₃SO₃ as a lithium salt to a concentration of 0.63 mol% to prepare an electrolyte solution.

### (Production of Battery)

The produced positive electrode and negative electrode were laminated with a separator interposed therebetween to form an electrode body. The electrode body was placed in a laminate exterior body, and the prepared electrolyte was injected and subjected to vacuum impregnation. Subsequently, the opening portion of the laminate exterior body was heat-sealed to produce a laminate battery.

### <Example 2 and Comparative Examples 1 to 3>

A positive electrode and a laminate battery were produced in the same manner as in Example 1, except that the type of conductive auxiliary agent contained in the positive electrode mixture was changed as illustrated in Table 2.

### <Evaluation>

The swelling of the electrode and the discharge characteristics of the battery in Examples 1 and 2 and Comparative Examples 1 to 3 were evaluated by the following methods.

### (Swelling of Electrode)

1) First, the surface height of the positive electrode before the electrolyte was dropped was measured using a laser microscope (VK-X3000, manufactured by Keyence Corporation).
2) Subsequently, 1 µL of the electrolyte was dropped onto the surface of the positive electrode, and the positive electrode was dried at room temperature until the electrolyte was absorbed. Subsequently, the positive electrode was dried at 80°C for 12 hours using a thermostatic chamber, and the surface height of the positive electrode at the dropping portion was measured in the same manner as described above.
3) Then, the swelling amount (µm) of the electrode was calculated by subtracting the height of the surface of the positive electrode before the dropping in 1) (approximately 12 µm) from the height of the surface of the positive electrode after the dropping in 2). Note that, the "height of the surface" of the positive electrode refers to the maximum height in the surface roughness of the positive electrode mixture.

### (Discharge Characteristics)

The produced battery was subjected to a discharge test under the following conditions.

The discharge was performed in a constant current (CC) discharge mode. The current rate was set to 1/20C, and the termination voltage was set to 2.0 V. The discharge test was conducted at 23°C.

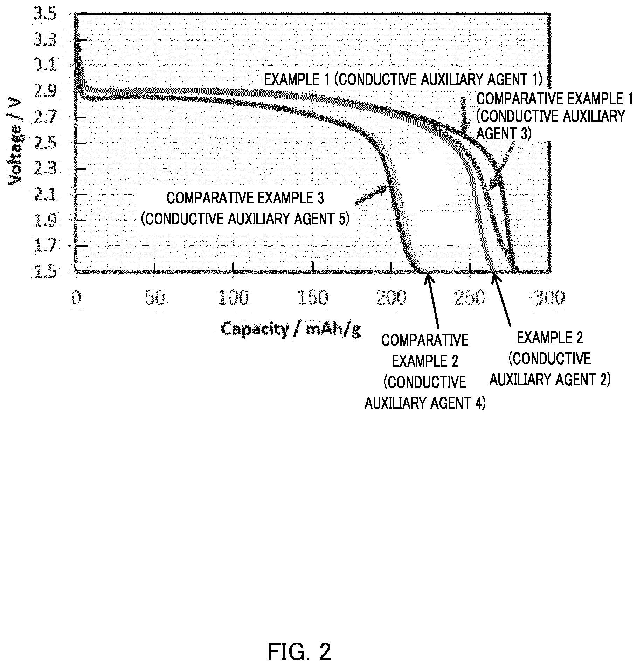

The evaluation results are illustrated in Table 3. In addition, FIG. 2 illustrates the discharge curves of the batteries in Examples and Comparative Examples.

**[Table 3]**

| | Conductive auxiliary agent | | | Swelling of electrode | | Battery characteristics |
|---|---|---|---|---|---|---|
| | Type | Specific surface area [m²/g] | Al amount [mass ppm] | Surface height after dropping [µm] | Swelling amount [µm] | Discharge capacity [mAh/g] |
| Example 1 | 1 | 1100 | 9.79 | 22.6 | 10.6 | 262.4 |
| Example 2 | 2 | 1064 | 10.21 | 14.6 | 2.6 | 272.1 |
| Comparative Example 1 | 3 | 1180 | 0 | 408.7 | 396.7 | 254.2 |
| Comparative Example 2 | 4 | 78 | 0 | 15.7 | 3.7 | 208.8 |
| Comparative Example 3 | 5 | 40 | 0 | 16.3 | 4.3 | 206.2 |

### (1) Regarding Discharge Characteristics

As illustrated in Table 3, it can be seen that the discharge capacity was low in the batteries of Comparative Examples 2 and 3, which used a conductive auxiliary agent with a specific surface area smaller than 1000 m²/g.

In contrast, it can be seen that the batteries in Examples 1 and 2 and Comparative Example 1, which used a conductive auxiliary agent with a large specific surface area of 1000 m²/g or more, exhibited a high discharge capacity (see FIG. 2).

From these facts, it is understood that in order to obtain a discharge capacity of a certain level or more, it is effective to set the specific surface area of the conductive auxiliary agent to 1000 m²/g or more.

### (2) Regarding Swelling of Electrode

In contrast, it can be seen that in Comparative Examples 2 and 3 using conductive auxiliary agents 4 and 5 with a specific surface area of less than 1000 m²/g, the swelling of the electrode was hardly observed, whereas in Comparative Example 1 using conductive auxiliary agent 3 with a specific surface area of 1000 m²/g or more, the swelling of the electrode was significantly observed.

In contrast, it is understood that, even when the specific surface area was as large as 1000 m²/g or more, the swelling of the electrode was significantly suppressed in Examples 1 and 2, in which conductive auxiliary agents containing Al were used. Specifically, in Example 1 using conductive auxiliary agent 1, the swelling was reduced to approximately 1/40, and in Example 2 using conductive auxiliary agent 2, the swelling was reduced to approximately 1/200, compared to Comparative Example 1 using conductive auxiliary agent 3.

From these facts, it is understood that the swelling of the electrode occurs when a conductive auxiliary agent with a large specific surface area of 1000 m²/g or more is used, and that the swelling of the electrode can be suppressed by using a conductive auxiliary agent containing aluminum (Al). Al is generally known to be oxidized and to form a coating, and it is considered that an effect can be expected even when Al is contained in a small amount.

According to the present invention, it is possible to provide a lithium battery positive electrode and a lithium battery each capable of suppressing the swelling of the electrode while maintaining the discharge characteristics.

### Industrial Applicability

According to the present invention, it is possible to provide a lithium battery positive electrode each capable of suppressing the swelling of the electrode while maintaining the discharge characteristics. This positive electrode for a lithium battery can be preferably used as a lithium battery positive electrode.

### Reference Signs List

10 Lithium primary battery
20 Positive electrode
21 Positive electrode current collector
22 Positive electrode mixture
23 Positive electrode terminal plate
30 Negative electrode
31 Negative electrode current collector
32 Negative electrode active material
33 Negative electrode terminal plate
40 Separator
50 Exterior body
60 Electrode body

## Claims

1. A lithium battery positive electrode, comprising:
a positive electrode active material containing manganese dioxide; and
a conductive auxiliary agent, wherein
the conductive auxiliary agent includes carbon black, the carbon black having an average primary particle diameter of 30 nm or more and a specific surface area of 1000 m²/g or more and containing Al.

2. The lithium battery positive electrode according to claim 1, wherein a content of Al in the carbon black is 5 mass ppm or more with respect to the carbon black.

3. The lithium battery positive electrode according to claim 2, wherein the content of Al in the carbon black is less than 20 mass ppm with respect to the carbon black.

4. The lithium battery positive electrode according to claim 1, wherein the positive electrode active material further contains a graphite-based active material.

5. The lithium battery positive electrode according to claim 1, wherein the conductive auxiliary agent further contains graphite.

6. A lithium battery, comprising:
the lithium battery positive electrode according to any one of claims 1 to 5;
a negative electrode containing metal lithium or a lithium alloy;
a separator disposed between the lithium battery positive electrode and the negative electrode; and
an electrolyte.

7. The lithium battery according to claim 6, wherein the electrolyte contains a cyclic carbonate solvent and a chain carbonate solvent.
